# EUROPEAN PATENT SPECIFICATION

(11) **EP 2 522 811 B1**
(45) Date of publication and mention of the grant of the patent: **01.05.2019**
(21) Application number: 12167384.2
(22) Date of filing: 09.05.2012
(51) Int. Cl.: F01D 11/00, F16J 15/44

(54) **Retractable seal system**
Einziehbare Dichtungsvorrichtung
Dispositif d'étanchéité rétractable

(30) Priority: 10.05.2011 US 201113104059
(43) Date of publication of application: 14.11.2012
(73) Proprietor: General Electric Company, Schenectady, NY 12345 (US)
(72) Inventor: Samudrala, Omprakash, Niskayuna, NY New York 12309 (US); Kumar, Siddarth, Niskayuna, NY New York 12309 (US); Crum, Gregory, Mauldin, SC South Carolina 29662 (US); Sha, Karimulla Shaika, 560066 Bangalore, Karnataka (IN)
(74) Representative: Lee, Brenda

(56) References cited:
- EP-A1- 1 653 129
- US-A1- 2001 004 145
- US-A1- 2010 078 893
- US-B1- 6 173 962

## Description

### TECHNICAL FIELD

The present application relates generally to turbine engines and more particularly relates to a pressure balanced, retractable seal system for limiting frictional forces about the seal for predictable operation, during transient events, over the life of the seal.

### BACKGROUND OF THE INVENTION

Brush seals are commonly used to eliminate or minimize air leakage through a gap between parts or components that may be positioned adjacent to each other. For example, brush seals are positioned in rotating mechanisms such as turbine engines used for power generation and the like. Typically, the brush seals minimize the leakage between regions at different pressures on opposite sides of the seal. As a specific example, a brush seal may be used to minimize air leakage through the gap (or clearance) between a stationary component such as a stator and a rotating component such as a rotor. Brush seals are contact seals with bristles contacting the rotor surface so as to allow for a tight clearance and leakage reduction as compared to non-contact seals such as labyrinth seals and the like.

The bristles of a brush seal, however, may undergo substantial wear due to interference between the bristles and the rotor caused by thermal transients during, for example, turbine start up or shutdown. This wear may accumulate over a number of startups/shutdown cycles so as to reduce the leakage performance of the seal during steady state operations. Wear in the bristles generally correlates with an overall decrease in turbine efficiency and power output.

A retractable brush seal may eliminate the wear due to thermal interference during startup or shutdown by physically moving the seal away from the rotor. A retractable brush seal may be passively activated by means of leaf springs and the like that respond to the varying pressure differential across the seal. The retractable brush seal may be positioned in a high clearance position such that the increasing pressure deferential during startup deforms the leaf springs to move the seal closer to the rotor. Similarly during shutdown, the falling pressure differential causes the leaf springs to retract so as to move the seal away from the rotor. The retractable brush seal thus eliminates or reduces bristle/rotor interference so as to provide an increased component lifetime.

The retractable brush seal usually is mounted in a mating slot machined into the stator. The two hooks of the mating slot provide rigid support for leaf spring deformation during the motion of the retractable seal towards and away from the rotor. The pressure differential across the seal loads it against the aft support hook so as to form a gas joint that prevents bias leakage through the support hook. Over the operating life of the retractable brush seal, however, the coefficient of friction at a seal/hook contact surface may vary due to oxidation and corrosion of the mating parts as well as due to surface finish changes resulting from fretting or sliding wear between the parts. As a result, seal closure and retraction behavior may vary over time. Such changes may result in the seal not closing fully to the desired low clearance positioning during startup or not retracting before the thermal interference between the stator and rotor occurs during shutdown. The former may result in a significant performance reduction while the later may result in excessive seal wear or damage.

Examples of brush seal arrangements can be found in EP 1653129, US 2001/004145 and US 6173962.

There is a desire for an improved retractable seal system that eliminates or reduces the impact of frictional forces on seal motion. Such an improvement should provide overall seal system predictability, reliability, and increased lifetime. Given such, overall leakage performance may be improved over the long term for increased overall turbine engine efficiency and power output.

### SUMMARY OF THE INVENTION

The present invention provides a retractable seal system for use between a high pressure side and a low pressure side of a turbine engine. The retractable seal system includes a seal positioned in a slot of a stationary component, a pressure balance pocket positioned about the seal, and a conduit in communication with the pressure balance pocket and the high pressure side. The seal comprises a neck positioned between a pair of hooks of the slot of the stationary component; an upper flange positioned on the pair of hooks within a groove of the stationary component wherein the pair of hooks are formed by the groove, and one or more springs positioned about the stationary component and positioned in between the flange and the pair of hooks; and a conduit in communication with the pressure balance pocket and the high pressure side.

These and other features and improvements of the present application will become apparent to one of ordinary skill in the art upon review of the following detailed description when taken in conjunction with the several drawings and the appended claims.

### BRIEF DESCRIPTION OF THE DRAWINGS

Embodiments of the present invention will now be described, by way of example only, with reference to the accompanying drawings in which:
Fig. 1 is a schematic view of a gas turbine engine.
Fig. 2A is a side cross-sectional view of a retractable seal system as may be described herein.
Fig. 2B is a perspective view of the retractable seal system of Fig 2A.
Fig. 3A is a side cross-sectional view of an alternative embodiment of a retractable seal system as may be described herein.
Fig. 3B is a perspective view of the retractable seal system of Fig 3A.
Fig. 4 is a side cross-sectional view of an alternative embodiment of a retractable seal system as may be described herein.
Fig. 5A is a side cross-sectional view of an alternative embodiment of a retractable seal system as may be described herein.
Fig. 6B is a perspective view of a portion of the retractable seal system of Fig 5A.

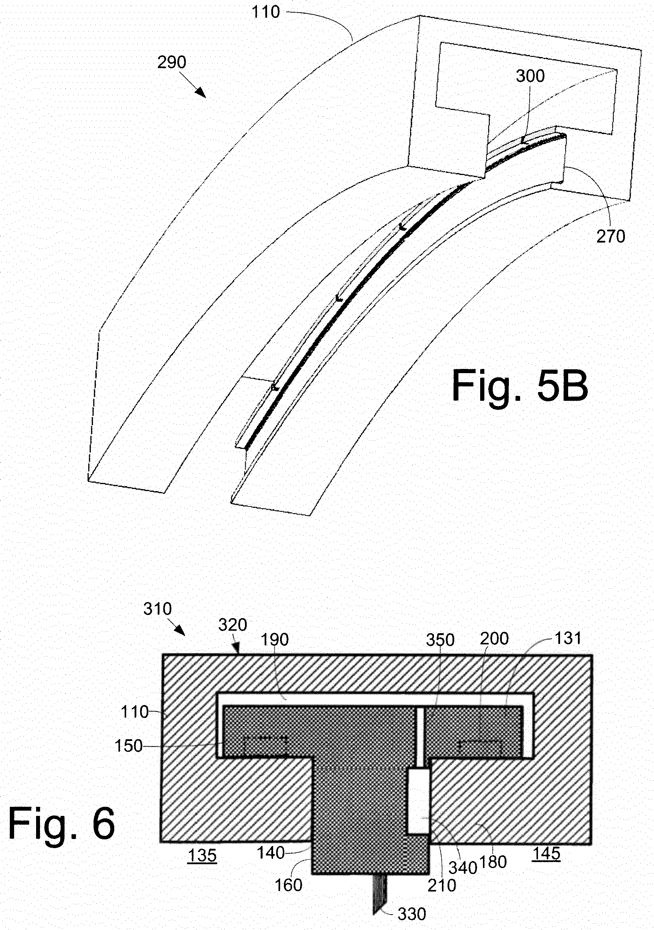

Fig. 6 is a side cross-sectional view of an alternative embodiment of a retractable seal system as may be described herein.

### DETAILED DESCRIPTION

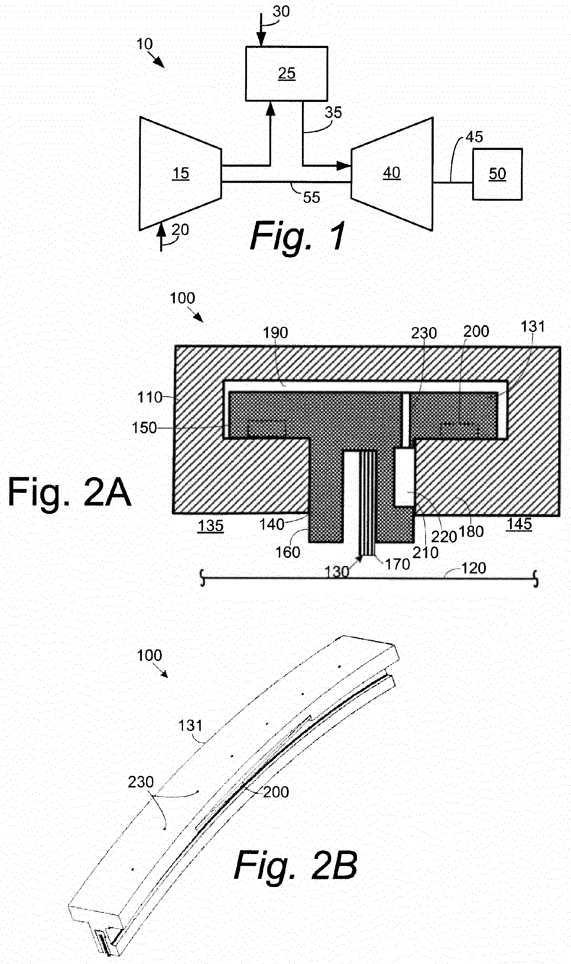

Referring now to the drawings, in which like numerals refer to like elements throughout the several views, Fig. 1 shows a schematic view of gas turbine engine 10 as may be described herein. The gas turbine engine 10 may include a compressor 15. The compressor 15 compresses an incoming flow of air 20. The compressor 10 delivers the compressed flow of air 20 to a combustor 25. The combustor 25 mixes the compressed flow of air 20 with a compressed flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. As described above, the mechanical work produced in the turbine 40 drives the compressor 15 via a shaft 45 and an external load 50 such as an electrical generator and the like.

The gas turbine engine 10 may use natural gas, various types of syngas, and/or other types of fuels. The gas turbine engine 10 may be any one of a number of different gas turbine engines offered by General Electric Company of Schenectady, New York and the like. The gas turbine engine 10 may have different configurations and may use other types of components. Other types of gas turbine engines also may be used herein. Multiple gas turbine engines, other types of turbines, and other types of power generation equipment also may be used herein together.

Figs. 2A and 2B show one example of a retractable seal system 100 as may be described herein. Similarly to that described above, the retractable seal system 100 seals between a stationary component 110 such as a stator and the like and a rotating component 120 such as a rotor and the like. Any type of stationary component 110 and rotating component 120 may be used herein. Other configurations and other components may be used herein.

The retractable seal system 100 may include a brush seal 130. The brush seal 130 may be mounted rigidly in a retractable seal holder 131 as is shown. Alternatively, the brush seal 130 may be shaped into the retractable seal holder 131 itself. The brush seal 130 may be positioned within a seal slot 140 of the stationary component 110 and extend towards the rotating component 120. The brush seal 130 may be positioned between a high pressure side 135 and a low pressure side 145. The seal holder 131 may include an upper flange 150 and an elongated neck 160. Additional flanges (or wings) also may be used to aid in preloading and the like. One or more bristles 170 may be mounted about the neck 160 and extend towards the rotating component 120. The bristles 170 may be made out of metal or other materials such as ceramics. Any number or size of the bristles 170 may be used. The flange 150 of the seal holder 131 may be positioned on a pair of hooks 180 formed by a groove 190 in the stationary component 110. A number of springs 200 may be positioned between the flanges 150 of the seal holder 131 and the hooks 180 formed about the seal slot 140. Other components and other configurations may be used herein. Although leaf springs are shown, any type of mechanical springs such as helical springs, disk springs and the like may be used to achieve the desired passive actuation.

As described above, the neck 160 of the seal holder 131 may be forced against the hook 180 on the low pressure side 145 at a contact surface 210. The coefficient of friction therebetween may impact on the overall performance of the retractable seal system 100. A pressure balance pocket 220 positioned on the neck 160 of the seal holder 131 aids in reducing the total friction force during seal motion. A flange conduit 230 may extend from the pressure balance pocket 220 through the flange 150 and into the groove 190. The conduit 230 may be extend radially, axially, or any other orientation in between. The pressure balance pocket 220 may be any type of internal space with any size, shape, or volume. Likewise, the conduit 230 may be any type of channel or hole connecting the pocket 220 with the groove 190. Other configurations and other components may be used herein.

The pressure inside the pressure balance pocket 220 thus may be equalized with the upstream pressure on the high pressure side 135 through the flange conduit 230. Specifically, the use of the pressure balance pocket 220 reduces the axial forces pushing against the seal holder 131 on the high pressure side which, in turn, pushes the neck 160 against the hook 180. Given such, the pressure balance pocket 220 reduces the impact of a changing coefficient of friction by reducing the frictional forces opposing the motion of the seal holder 131. Adequate frictional contact, however, is still maintained between the neck 160 and the hook 180 so as to prevent leakage along the contact surface 210.

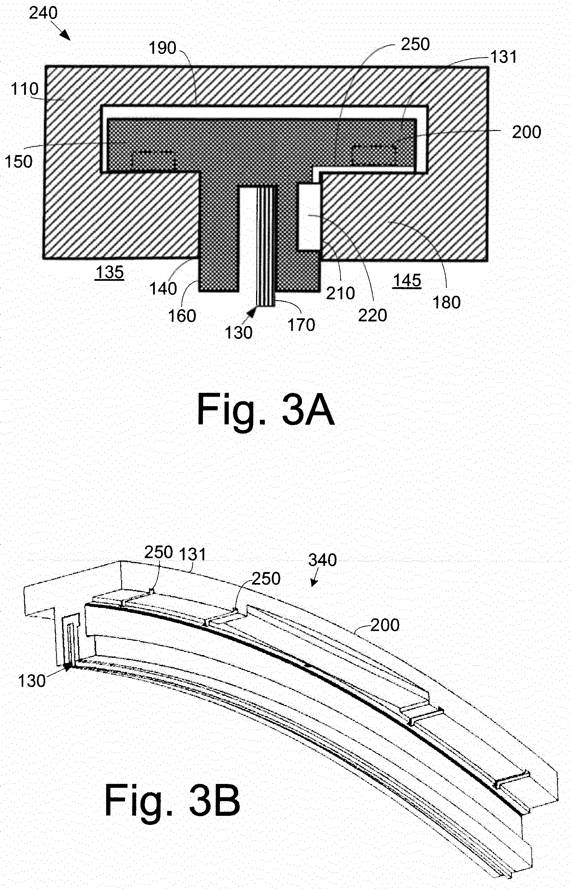

Figs. 3A and 3B show a further embodiment of a retractable seal system 240. In this embodiment, the pressure balance pocket 220 may be in communication with a flange groove 250. As is shown, the flange groove 250 may extend along the bottom of the flange 150 and into the side of the groove 190. Other configurations and other components may be used herein.

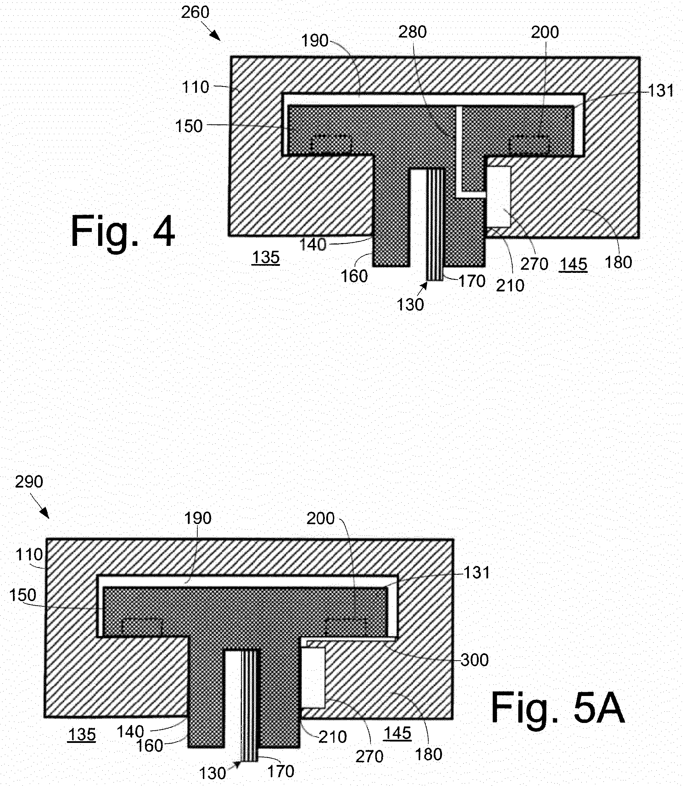

Fig. 4 shows a further embodiment of a retractable seal system 260. In this embodiment, a pressure balance pocket 270 may be positioned in one of the hooks 180. The pressure balance pocket 270 may be in communication with a flange conduit 280 that extends through the neck 160 and the flange 150 of the seal holder 131 and in communication with the groove 190. Other configurations and other components may be used herein.

Figs. 5A and 5B shows a similar example of a retractable seal system 290. In this embodiment, the pressure balance pocket 270 is again positioned within the hook 180. The pressure balance pocket 270 is in communication with a hook groove 300 that extends along the length of the hook 180 adjacent to the flange 150 of the seal holder 131 and again towards the side of the groove 190. Other configurations and other components may be used herein.

The various embodiments of the retractable seal system described herein are for purposes of example only. The use of any type of pressure balance pocket about either the neck 160 of the brush seal 130 and/or the hook 180 and in communication the high pressure side 135 upstream thereof so as to reduce the pressure about the contact surface 210 may be used herein.

The use of the retractable seal system thus reduces the frictional force about the neck 160 and the hook 180 while maintaining a leak proof seal. The reduction in friction should increase the overall robustness of the seal and predictability of the seal over the operating lifetime. The equalization of the pressure therein thus results in seal motion being less sensitive to the frictional coefficients opposing seal motion during transient operations and the like. The retractable seal systems also reduce the potential for seal instabilities that may result in tilting or cocking of the seal. Overall performance and operating life of the seal should be improved by a reduction in bristle wear caused by thermal interference and the like.

Fig. 6 shows a further embodiment of a retractable seal system 310. This embodiment shows the use of a labyrinth seal 320 with one or more labyrinth teeth 330. The labyrinth seal 320 may be used with a pressure balance pocket 340 and a conduit 350. The pressure balance pocket 340 may be positioned on the neck 160 or the hook 180. Likewise, the conduit 350 may extend through the flange 150 or as a groove along the flange 150 or the hook 180. Other configurations and other components may be used herein.

The retractable seal system described herein thus may be applicable to other types of rotor-stator seals in addition to brush seals and labyrinth seals. For example, packing rings, honeycomb seals, abradable seals, and the like may be used herein. Moreover, the retractable seal system may be used in many other gas or steam turbine locations and the like. The retractable seal system thus may be used between any type of stationary component 110 and any type of rotating component 120 in any desired location.

It should be apparent that the foregoing relates only to certain embodiments of the present application and that numerous changes and modifications may be made herein by one of ordinary skill in the art without departing from the scope of the invention as defined by the following claims.

## Claims

1. A retractable seal system (100) for use between a high pressure side (135) and a low pressure side (145) of a turbine engine (10), comprising:
a seal (130) positioned in a slot (140) of a stationary component (110) wherein the seal (130) comprises a neck (160) positioned between a pair of hooks (180) of the slot (140) of the stationary component (110); an upper flange (150) positioned on the pair of hooks within a groove (190) of the stationary component (110) **characterized in that**
the pair of hooks are formed by the groove, and one or more springs (200) positioned about the stationary component (110) and positioned in between the flange and the pair of hooks;
a pressure balance pocket (220) positioned about the seal (130); and
a conduit (230) in communication with the pressure balance pocket (220) and the high pressure side (135).

2. The retractable seal system (100) of claim 1, wherein the seal (130) faces a rotating component (120).

3. The retractable seal system (100) of claim 1 or 2, wherein the seal (130) comprises a brush seal (130).

4. The retractable seal system (100) of claim 3, wherein the brush seal (130) comprises a plurality of bristles (170).

5. The retractable seal system (100) of claim 1, wherein the pressure balance pocket (220) is positioned within the neck (160).

6. The retractable seal system (100) of claim 1, wherein the pressure balance pocket (220) is positioned within one of the pair of hooks (180).

7. The retractable seal system (100) of any preceding claim, wherein the conduit (230) comprises a flange conduit (230) through a flange (150) of the seal (130).

8. The retractable seal system (100) of any preceding claim, wherein the conduit (230) comprises a flange groove (250) along a flange (150) of the seal (130).

9. The retractable seal system (100) of any preceding claim, wherein the conduit (230) comprises a hook grove (300) along a hook (180) of the stationary component (110).

10. The retractable seal system (100) of any preceding claim, wherein the seal (130) comprises a labyrinth seal (320).

11. The retractable seal system (100) of claim 10, wherein the labyrinth seal (320) comprises one or more labyrinth teeth (330).

## Patentansprüche

1. Einziehbares Dichtungssystem (100) zur Verwendung zwischen einer Hochdruckseite (135) und einer Niederdruckseite (145) eines Turbinentriebwerks (10), umfassend:
eine Dichtung (130), die in einem Schlitz (140) einer feststehenden Komponente (110) positioniert ist, wobei die Dichtung (130) einen Stutzen (160) umfasst, der zwischen einem Paar von Haken (180) des Schlitzes (140) der feststehenden Komponente (110) positioniert ist; einen oberen Flansch (150), der an dem Paar von Haken in einer Rille (190) der feststehenden Komponente (110) positioniert ist, **dadurch gekennzeichnet, dass**
das Paar von Haken durch die Rille gebildet ist und eine oder mehrere Federn (200) um die feststehende Komponente (110) herum positioniert sind und zwischen dem Flansch und dem Paar von Haken positioniert sind;
eine Druckausgleichsaussparung (220) um die Dichtung (130) herum positioniert ist; und
eine Leitung (230) in Kommunikation mit der Druckausgleichsaussparung (220) und der Hochdruckseite (135) steht.

2. Einziehbares Dichtungssystem (100) nach Anspruch 1, wobei die Dichtung (130) einer Drehkomponente (120) gegenüberliegt.

3. Einziehbares Dichtungssystem (100) nach Anspruch 1 oder 2, wobei die Dichtung (130) eine Bürstendichtung (130) umfasst.

4. Einziehbares Dichtungssystem (100) nach Anspruch 3, wobei die Bürstendichtung (130) eine Vielzahl von Borsten (170) umfasst.

5. Einziehbares Dichtungssystem (100) nach Anspruch 1, wobei die Druckausgleichsaussparung (220) in dem Stutzen (160) positioniert ist.

6. Einziehbares Dichtungssystem (100) nach Anspruch 1, wobei die Druckausgleichsaussparung (220) in einem Paar von Haken (180) positioniert ist.

7. Einziehbares Dichtungssystem (100) nach einem der vorstehenden Ansprüche, wobei die Leitung (230) eine Flanschleitung (230) durch einen Flansch (150) der Dichtung (130) hindurch umfasst.

8. Einziehbares Dichtungssystem (100) nach einem der vorstehenden Ansprüche, wobei die Leitung (230) eine Flanschrille (250) entlang eines Flansches (150) der Dichtung (130) umfasst.

9. Einziehbares Dichtungssystem (100) nach einem der vorstehenden Ansprüche, wobei die Leitung (230) eine Hakenrille (300) entlang eines Hakens (180) der feststehenden Komponente (110) umfasst.

10. Einziehbares Dichtungssystem (100) nach einem der vorstehenden Ansprüche, wobei die Dichtung (130) eine Labyrinthdichtung (320) umfasst.

11. Einziehbares Dichtungssystem (100) nach Anspruch 10, wobei die Labyrinthdichtung (320) eine oder mehrere Labyrinthverzahnungen (330) umfasst.

## Revendications

1. Système de joint d'étanchéité rétractable (100) destiné à être utilisé entre un côté haute pression (135) et un côté basse pression (145) d'un moteur à turbine (10), comprenant :
un joint d'étanchéité (130) positionné dans une fente (140) d'un composant fixe (110) dans lequel le joint d'étanchéité (130) comprend un col (160) positionné entre une paire de crochets (180) de la fente (140) du composant fixe (110) ; une bride supérieure (150) positionnée sur la paire de crochets dans une rainure (190) du composant fixe (110), **caractérisé en ce que**
la paire de crochets est formée par la rainure, et un ou plusieurs ressorts (200) positionnés autour du composant fixe (110) et positionnés entre la bride et la paire de crochets ;
une poche d'équilibrage de pression (220) positionnée autour du joint d'étanchéité (130) ; et
un conduit (230) en communication avec la poche d'équilibrage de pression (220) et le côté haute pression (135).

2. Système de joint d'étanchéité rétractable (100) selon la revendication 1, dans lequel le joint d'étanchéité (130) fait face à un composant rotatif (120).

3. Système de joint d'étanchéité rétractable (100) selon la revendication 1 ou 2, dans lequel le joint d'étanchéité (130) comprend un joint d'étanchéité à brosse (130).

4. Système de joint d'étanchéité rétractable (100) selon la revendication 3, dans lequel le joint d'étanchéité à brosse (130) comprend une pluralité de poils (170).

5. Système de joint d'étanchéité rétractable (100) selon la revendication 1, dans lequel la poche d'équilibrage de pression (220) est positionnée dans le col (160).

6. Système de joint d'étanchéité rétractable (100) selon la revendication 1, dans lequel la poche d'équilibrage de pression (220) est positionnée dans l'un de la paire de crochets (180).

7. Système de joint d'étanchéité rétractable (100) selon l'une quelconque des revendications précédentes, dans lequel le conduit (230) comprend un conduit à bride (230) à travers une bride (150) du joint d'étanchéité (130).

8. Système de joint d'étanchéité rétractable (100) selon l'une quelconque des revendications précédentes, dans lequel le conduit (230) comprend une rainure de bride (250) le long d'une bride (150) du joint d'étanchéité (130).

9. Système de joint d'étanchéité rétractable (100) selon l'une quelconque des revendications précédentes, dans lequel le conduit (230) comprend une rainure de crochet (300) le long d'un crochet (180) du composant fixe (110).

10. Système de joint d'étanchéité rétractable (100) selon l'une quelconque des revendications précédentes, dans lequel le joint d'étanchéité (130) comprend un joint d'étanchéité à labyrinthe (320).

11. Système de joint d'étanchéité rétractable (100) selon la revendication 10, dans lequel le joint d'étanchéité à labyrinthe (320) comprend une ou plusieurs dents de labyrinthe (330).
